# EUROPEAN PATENT APPLICATION

(11) **EP 2 587 436 A2**
(43) Date of publication of application: **01.05.2013**
(21) Application number: 12190307.4
(22) Date of filing: 29.10.2012
(51) Int. Cl.: G06Q 30/00

(54) **Interactive retail system**

(30) Priority: 28.10.2011 US 201113284681
(71) Applicant: Adidas AG, 91074 Herzogenaurach (DE)
(72) Inventor: Aubrey, Chris, 90419 Nürnberg (DE)
(74) Representative: Wegner, Hans

(57) **Abstract**

The present invention concerns a method comprising displaying, on a virtual projection, at least one image of at least one product available for purchase to attract customers, the virtual projection comprising one or more displays to display the at least one image of the at least one product. The method further includes initiating a shopping session with a customer on the virtual projection whereby the customer has access to one or more products related to the virtual projection. The shopping session transfers to and continues on a secondary device whereby the at least one image of the at least one product is accessed on the secondary device. The method further includes initiating a customization mode to allow a customer to customize properties of one or more of the images of products.

## Description

NOT APPLICABLE

### BACKGROUND OF THE INVENTION

When shopping, for example, for shoes, a customer typically obtains and analyzes information so that they can make an informed purchase. For example, a website that sells shoes may use digital images of shoes so that a customer can see the appearance of the shoes. However, because customers are not able to physically try on the shoes to determine if the shoes have the desired fit, customers often choose to visit traditional "brick and mortar" stores over shopping online. A customer may also favor a traditional "brick and mortar" store over shopping online because they can interact with a salesperson. However, the effectiveness of a salesperson is limited for a number of reasons. As an example, a salesperson may not have adequate information to meet the customer's needs. Such may be the case when the salesperson is a recent hire or the shoe is a newly released product. Furthermore, if many customers are in the store, a salesperson may not be able to pay attention to everyone at the same time. Consequently, some customers may have to wait for long periods of time or make purchases without receiving product advice. It can be also very difficult for a salesperson to identify the needs of customers and to provide suggestions which meet the customer's needs.

It is also the case that certain measurements of shoes may vary across brands. For example, a size "9" of one brand of shoe may have a much different fit than a size "9" of another brand of shoe. Differences also relate to other features, which are often important when the shoe is used for specialized purposes, such as a specific sport. Even absent a difference between a measurements across brand names, the purpose of the shoe (e.g., hiking) may dictate the selection of the measurements. Such differences between brands of shoes and purposes can add to the amount of time spent by the customer in trying on shoes in the typical "brick and mortar" store or can discourage purchases all together when the customer is confused. Even if a purchase is made, an improper purchase may lead to poor customer satisfaction and, in turn, lower customer loyalty and word of mouth reputation. This problem is not limited to shoes, and can appear in purchases with any consumer product.

### BRIEF SUMMARY OF THE INVENTION

Various embodiments of the present invention relate to an interactive retail system configured to display a user interactive environment featuring a virtual projection (e.g, "virtual shelf, " "virtual display") populated with at least one image of at least one retail item available for purchase. Displaying "virtual products", i.e. images thereof, in this manner has the technical advantage of optimizing the space needed for displaying the products, as compared to conventionally displaying a plurality of physical products in a customer store. In certain embodiments, the retail system reacts when users (e.g., consumers) approach and can display retail items based on various user characteristics. For example, the retail system may determine the user's gender, physical dimensions, and/or purchase preferences (e.g., based on user purchase history), select appropriate retail items based thereon, and display images of the selected retail items on the virtual projection, virtual shelf, or other type of display. It should be noted that "virtual projection" can be any suitable visual multimedia presentation (e.g., on a video screen, projector screen or surface, holographic image, and the like). In this manner, the offered images of products can be better customized to the physical characteristics of the user. In certain embodiments, the retail system may make additional recommendations, display marketing information and media content related to selected retail items, display the technology behind the retail items, and provide a user interface for customization of selected retail items. In some embodiments, a user may access social media, web content, and gaming services through the user interactive environment. The user may complete a purchase transaction on the retail system or in conjunction with additional mobile devices including tablet computers, mobile phones, remote devices and the like.

In certain embodiments, mobile devices can be available within the retail environment. In some embodiments, mobile devices can be associated with the interactive retail system. For example, the mobile devices can be provided by the commercial entity operating the interactive retail system. In other embodiments, the mobile devices are privately owned (e.g., by the customer) and can be logged in or connected to a network associated with the interactive retail system. In alternative embodiments, a customer (e.g., user) can have a direct connection to the interactive retail system via wireless connection or quick-response (QR) code. The QR-code can be displayed on the projection or screen associated with the interactive retail system. In some embodiments, the QR-code can be a user ID to allow the personal interaction to be continued on the mobile device (e.g., registered access to web page with content from customer interaction with interactive retail system). On the other hand, the QR-code can be a product ID, such that the user interaction on the mobile device begins with product related content. In a further embodiment, the QR-code can be placed on a product, on a different display, etc., and can be used by the mobile device as an additional element for acquiring product related information or identifying similar products. In certain embodiments, the QR-code can be shared with other people through social networks.

Mobile devices (e.g., tablet computers) can also track customer shopping behavior and analyze customer needs and/or interests based on the customer's transaction and/or viewing history with the interactive retail system. Furthermore, mobile devices associated with the interactive retail system can function as a shop assistant guide by providing the customer's transaction and viewing history to the shop assistant to help them provide a more informed and individually tailored customer service experience.

According to various embodiments, the interactive retail system tracks the customers viewing history with the interactive retail system. The interactive retail system can be configured to recognize registered customers (e.g., customers who have previously opened at account) and access consumer data which may include previous purchases, consumer behavior (e.g., media interactive history, visited web pages, social network interactions, etc.). The interactive retail system can be configured to align the interactive environment with a customer's preferences. For example, if a customer prefers a certain color with a given set of products, the interactive retail system can provide product suggestions in that particular color, or provide assortments of colors with higher instances of the favored color. This process can be dynamically adjusted or modified during the interactive session. It should be noted that this interactive feature can be applied to other product features including identified customer preferences in certain product materials, patterns, or other product features.

In further embodiments, the interactive retail system can scan a music database on a personal mobile device to determine a preferred type of music or song list. The interactive retail system can compare the information associated with a music file with database where products or color ranges are associated with certain types of music (e.g., musical genres, titles, etc.) and recommend those products to the customer.

In yet further embodiments, the interactive retail system can track the physical movements of a customer by a camera and provide product suggestions to the customer (e.g., by audio or video interface) based on the movements. For example, body language and/or facial expressions with respect to a customer's attention to certain products can be captured and used to determine customer preferences. The interactive retail system can utilize the customer preferences to customize the interactive retail system to provide a shopping experience tailored to those preferences to meet customer interests. For example, if the customer views or selects a large number of baseball shoes and accessories, then the interactive retail system can be adapted to suggest additional baseball related products based, for example, on the customer's viewing or purchase history. In certain embodiments, the interactive retail system can dynamically adjust the shopping experience based on the customer's interest, attention, and positive feedback (e.g., body language, facial expressions, identifiable audio responses, etc.). In some embodiments, the interactive retail system can use cameras to capture facial micro expressions and analyze the customer's emotional reaction to various suggested products. Based partly on that analysis, the interactive retail system can maintain the customer's interest and attention by determining which products are favorable to the particular customer. In other embodiments, product suggestions can be based, in part or in whole, on the measured reactions of the customer (e.g., facial expressions, body language, etc.) as identified by the interactive retail system by way of cameras, microphones, and the like.

In certain embodiments, the retail system comprises a frame, a plurality of bays disposed in the frame, wherein the bays comprise one or more video cameras, one or more video screens, and one or more user-input devices. One or more processors execute instructions to analyze video data received from the one or more video cameras to detect the presence of a user and to determine one or more physical attributes of the user. The interactive retail system selects from a catalog of retail items one or more retail items appropriate for the user based at least in part on the one or more physical attributes of the user and displays one or more images of the one or more retail items selected from the catalog on the one or more video screens.

The interactive retail system preferably analyzes input data received from the one or more user-input devices to detect a user input command which may include one of a scroll-items command and a select-item command. The scroll items command may cause one or more processors to scroll the one or more retail items selected from the catalog on the one or more displays and the select-item command may cause the one or more processors to select and display a rotatable image of the retail item intended to be selected. In further embodiments, the retail system may cause the one or more processors to display statistics, physical dimensions, and related media files of the retail items on the one or more video screens.

In other embodiments, the display can be a screen (e.g., monitor) or a touch screen. Alternatively, the interactive interface of the interactive retail system can be projected on a surface (e.g., wall, mannequins, shoes, shirts, sports equipment, flat surfaces, etc.) by a video projector. It should be noted that such projections may require sensors (e.g., cameras, infra-red detection, product sensors, QR codes, etc.), as described below in the detailed description, in order to provide an interactive interface to detect user interaction with the projection. For example, certain products can be projected on a mannequin (e.g., shoes and/or clothing), according to certain embodiments. The mannequin may be outfitted with sensors to detect a touch by a customer (e.g., if a customer touches a shoe projected on the mannequin's foot). The sensor determines the location that was touched and sends it to the interactive retail system for further processing. The interactive retail system can then determine, based on the sensor signals, which product was touched by the customer and subsequently display the shoe and/or related merchandise on one of the screens of the interactive retail system for further customer interaction. In some embodiments, the screen can be curved and/or flexible and/or transparent. The interactive retail system can be mobilized and implemented in a variety of locations including, but not limited to, public locations (e.g., airports, train stations, bus stops), remote locations (e.g., mountain huts, parks, walking trails, beaches, by lakes, etc.), sports facilities (e.g., fitness studios, sports stadiums, gyms, etc.), in restaurants, schools, shopping malls, golf courses, and the like. The interactive retail system can project advertisements during certain times or on demand. For example, the interactive retail system can perform other services in different modes of operation (e.g., separately or simultaneously) including, but not limited to, ticket machine services, display public transportation schedules, etc. To illustrate, the interactive retail system can be configured to perform retail functions during peak hours of high customer interaction, and provide other services like displaying public service information during low periods of interaction. Some embodiments can be configured to switch from a non-retail mode (e.g., ticket machine) to a retail mode when the interactive retail system detects the presence of a user, or a user interacts with or engages the interactive retail system.

In various embodiments, a customer can register with the interactive retail system. For example, the customer can register (e.g., during a product purchase, during mobile device registration, etc.) in a data base and log in before interacting with the interactive retail system. The database can store purchase history, product viewing history, and the like. Furthermore, the consumer can register via near field communication, exchange additional data, and/or pay via near field communication.

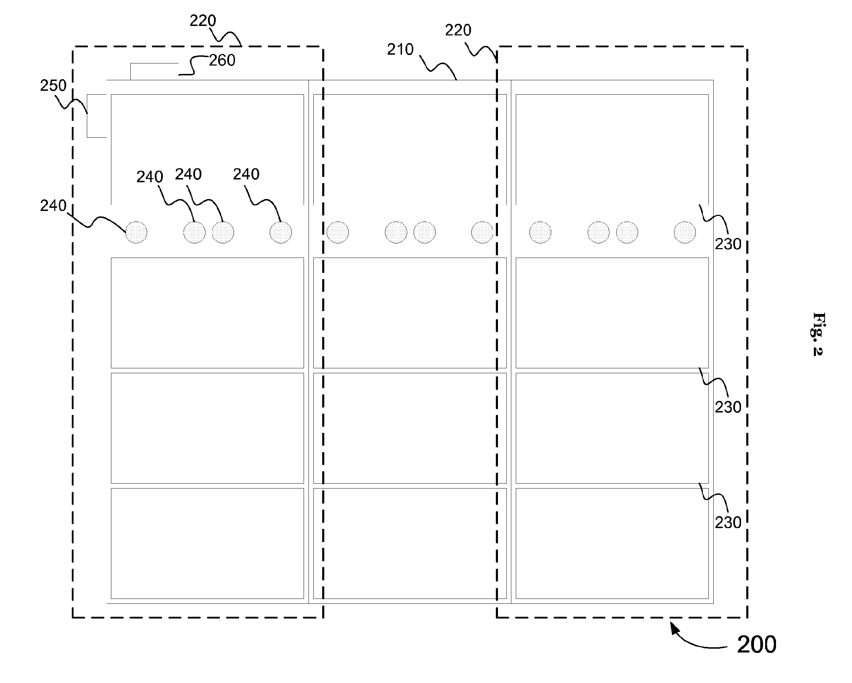

In certain embodiments, the interactive retail system can recognize customers (e.g., registered customers) via product sensors (e.g., sensors in shoes, shirts, heat rate belts, sensors carried by user, etc. for tracking movement and/or workout statistics), which can be recognized by the interactive retail system and associated with the specific customer. Alternatively, the interactive retail system can recognize the customer via face or voice recognition capabilities, as further described below with respect to FIG. 2. In some embodiments, the interactive retail system can track other metrics including shopping behavior such as attention to particular areas of a store (e.g., specific product displays, etc.) to determine a customer's interests. For example, if a customer spends a predetermined period of time in front of a particular product display (e.g., real products or product images), or spends more time in front of a particular product display in comparison to other product displays, the interactive retail system can determine characteristics of products in the particular product display (e.g., type, brand, etc.) and display similar products on its screens (e.g., monitors, etc.) to better appeal to the customer's product preferences and entice the customer to engage the interactive retail system. It should be noted that the interactive retail system can detect customer location, face/voice recognition, etc., to determine shopping behavior with its various hardware (e.g., cameras, infra-red detection, sensors, etc.) as further described below in the detailed description. Information about customers can be stored in a customer database which can be local, remote, centralized, spread over multiple databases, or any storage configuration known by those of ordinary skill in the art. The database can store and update sports related activities of a customer, shopping related data (e.g., payment methods, favorite products, etc.) or any other information and any combination thereof. In further embodiments, the interactive retail system and/or one or more of the previously mentioned databases can access social network profiles of the customer. For example, data can be exchanged between the social network(s), the database(s), mobile devices (e.g., registered devices), product sensors (e.g., shoe sensors, etc.) and the interactive retail system to collect a detailed description of a customer profile to better provide a more personalized interactive experience for the particular customer.

In another embodiment the customer can have personal access to their database by a variety of methods (e.g., name/password, answer a series of questions regarding the customer's personal characteristics, statistics, product purchases and/or preferences) and can tailor the interactive environment based on the customer's purchase history and preferences.

### BRIEF DESCRIPTION OF THE DRAWINGS

FIG. 1A is a simplified block diagram of aspects of a retail system network, according to embodiments of the present invention.

FIG. 1 B is a simplified block diagram of aspects of a retail system network, according to embodiments of the present invention.

FIG. 2 is a simplified block diagram of retail system, according to embodiments of the present invention.

FIG. 3 is a simplified flow diagram illustrating a method for creating a user interactive environment on a retail system, according to embodiments of the present invention.

FIG. 4A is a simplified block diagram of aspects of a retail system network, according to embodiments of the present invention.

FIG. 4B is a depiction of an interactive retail system, according to certain exemplary embodiments.

FIG. 4C is a depiction of a tablet computer used in conjunction with an interactive retail system, according to certain exemplary embodiments.

FIG. 4D is a depiction of an interactive retail system and several mobile devices used in conjunction with the interactive retail system, according to certain exemplary embodiments.

FIG. 4E is a depiction of a mobile retail system, according to certain exemplary embodiments.

FIG. 5A is a simplified diagram illustrating some available features in a user interactive environment of a retail system, according to embodiments of the invention.

FIG. 5B is a simplified flow diagram illustrating a method for creating a shopping session with a customer, according to embodiments of the present invention.

FIG. 6 is a diagram of a computer apparatus, according to certain exemplary embodiments.

### DETAILED DESCRIPTION OF THE INVENTION

Embodiments of the invention are generally directed to interactive retail systems.

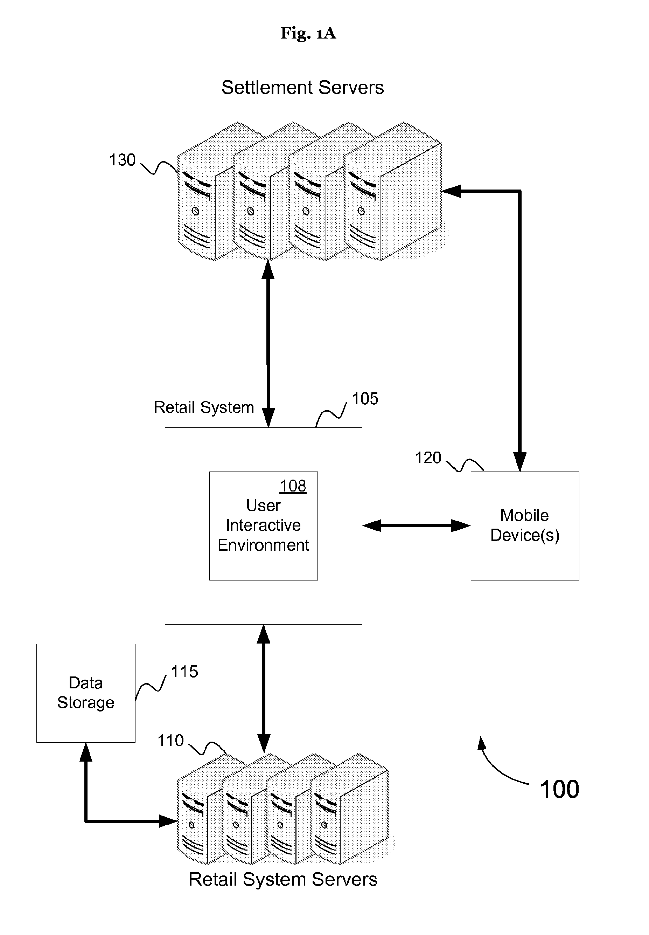

FIG. 1A is a simplified block diagram of a retail system network 100, according to certain embodiments of the present invention. The retail system network 100 comprises a retail system 105, retail system servers 110, a data storage device 115, mobile device(s) 120, and settlement servers 130. The retail system 105 is configured to display a user interactive environment 108 which is further detailed below and depicted in FIG. 2. The retail system 105 is configured for electronic communication with the retail system servers 110, the mobile device(s) 120, and the settlement servers 130. In certain embodiments, the mobile device(s) 120 are configured for electronic communication with the settlement servers 130. In certain embodiments, the mobile devices 120 are configured for electronic communication with the retail system servers 110 (connection not shown). In some embodiments, the data storage device 115 is configured for electronic communication with the retail system server(s) 110 and/or the retail system 105.

In operation, the retail system 105 displays a user interactive environment 108 on one or more screens to allow a user to browse, select, research, and/or purchase a variety of retail items for purchase. In certain embodiments, the data storage device 115 stores images and information (e.g., marketing, technical, and pricing information, etc.) of the various retail items. In some embodiments, the data storage device 115 is located within the retail system server(s) 110. The details of the retail system 105 and the user interactive environment are further discussed below and depicted in FIGS. 2-5.

The retail system servers 110 control the hardware and software operations of the retail system 105. According to certain embodiments, the retail system servers 110 are remotely located from the retail system 105 and provide various data processing, networking, and management functions. In one non-limiting example, the retail system servers 110 operate the user interactive environment 108 on the retail system 105. In some embodiments, the retail system server(s) 110 is located within the retail system 105. For example, the retail system server(s) 110 may be located within the frame of the retail system 105 (see FIG. 2) or connected to the retail system. In other embodiments, there may be dedicated processors built into the retail system 105 to replace or provide support to the retail system servers 110.

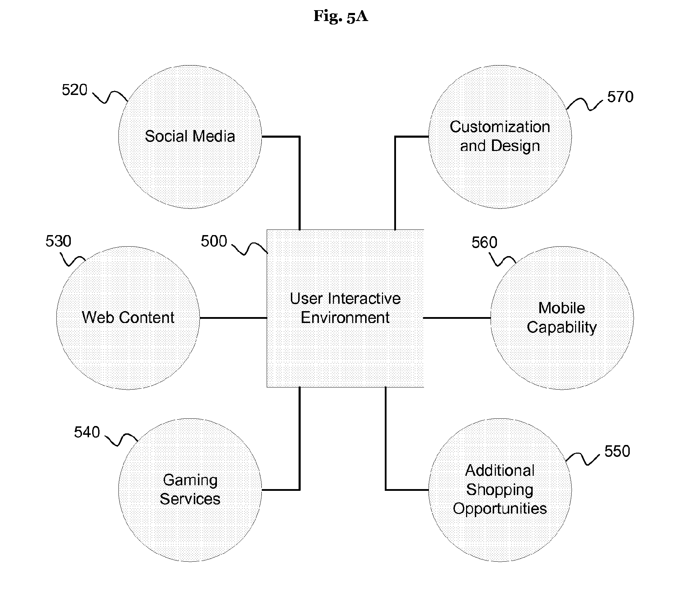

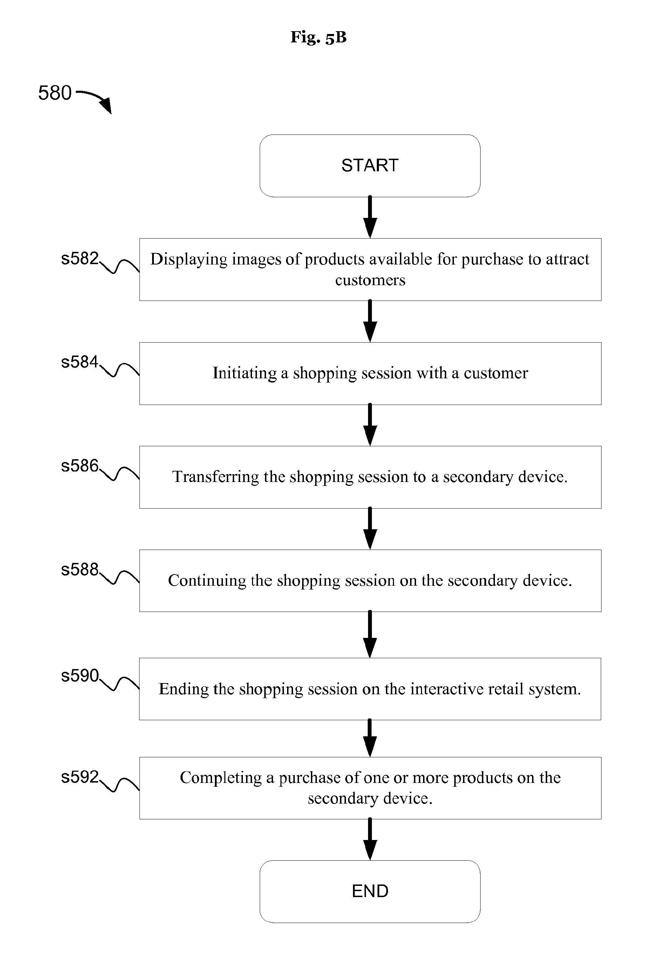

According to certain embodiments, a user may use one or more mobile devices 120 to wirelessly access the user interactive environment 108 of retail system 105 to remotely perform a variety of retail functions. For example, a user may browse and select a retail item, perform a settlement transaction to complete a purchase, or customize retail items in conjunction with the retail system 105. Some examples of mobile devices include cell phones, smart phones, tablet computers, notebook computers, personal digital assistants, and the like. In other embodiments, a user may use one or more mobile devices 120 to access the user interactive environment 108 by way of a hardwired connection. The mobile device 120 may perform a user settlement transaction (i.e. purchase of retail items) with the settlement transaction servers 130 through the retail system 105. Alternatively, the mobile device 120 may perform a settlement transaction directly with the settlement transaction servers 130, thus bypassing the retail system 105 to complete the purchase transaction. A mobile device 120 may optionally bypass the retail system 105 and communicate directly with the settlement transaction servers 130 if, for example, the retail item the user wants is out of stock. In some embodiments, the user or a sales person may request that the retail system servers 110 send a message to the user's mobile device 120 once the retail items is available wherein the user may use their mobile device 120 to log into their online account stored on the retail system servers 110 to purchase the item. Details regarding online accounts are further discussed below in reference to FIG. 5.

The settlement servers 130 perform the settlement transactions with the retail system 105 and mobile device(s) 120 to complete a sale. The operations and protocols of settlement transactions are not discussed in detail herein to avoid obfuscation of the novelty and focus of the present invention, but are known to those skilled in the relevant art.

Each server typically will include an operating system that provides executable program instructions for the general administration and operation of that server, and typically will include a computer-readable medium storing instructions that, when executed by a processor of the server, allow the server to perform its intended functions. Suitable implementations for the operating system and general functionality of the servers are known or commercially available, and are readily implemented by persons having ordinary skill in the art, particularly in light of the disclosure herein.

The retail system network 100 in one embodiment is a distributed computing environment utilizing several computer systems and components that are interconnected via communication links, using one or more computer networks or direct connections. However, it will be appreciated by those of ordinary skill in the art that such a system could operate equally well in a system having fewer or a greater number of components than are illustrated in FIG. 1A. Thus, the depiction of the retail system network 100 in FIG. 1 A should be taken as being illustrative in nature, and not limiting to the scope of the disclosure.

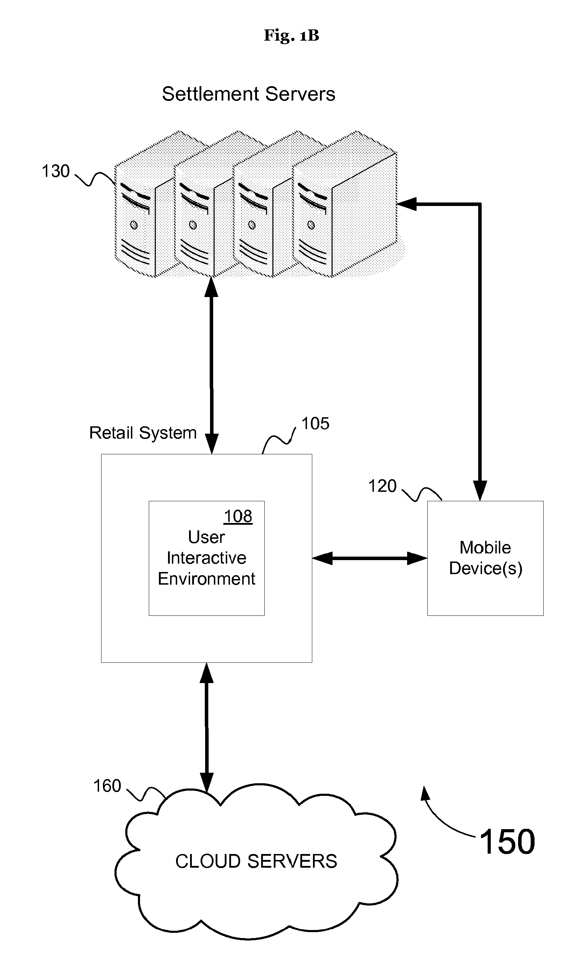

FIG. 1B is a simplified block diagram of a retail system network 150, according to certain embodiments of the present invention. The retail system network 150 comprises a retail system 105, cloud server 160, mobile device(s) 120, and settlement servers 130. The retail system 105 is configured to display a user interactive environment 108 which is further detailed below and depicted in FIG. 2. The retail system 105 is configured for electronic communication with the could server 160, the mobile device(s) 120, and the settlement servers 130. In certain embodiments, the mobile device(s) 120 are configured for electronic communication with the settlement servers 130. In certain embodiments, the mobile devices 120 are configured for electronic communication with the cloud server 160 (connection not shown). The cloud server 160 can be configured to serve the functions of the retail system servers 110 and data storage devices 115, as described above with respect to FIG. 1A. In certain embodiments, the retail system 105 of FIG. 1 B is configured as a "slave" system served by the cloud servers (e.g., "cloud network") which provides cloud computing services. In other words, the cloud servers 160 can provide the retail system 105 with the requisite processing needs (e.g., memory, resources, etc.) to operate the user interactive environment 108 (as further described with respect to FIG. 5).

FIG. 2 is a simplified block diagram of interactive retail system 200, according to some embodiments of the present invention. According to some embodiments, the interactive retail system 200 corresponds to the retail system 105 of FIG. 1A and may be implemented in the retail system network 100 of FIG. 1A. The interactive retail system 200 may optionally comprise a frame 210, one or more bays 220, one or more screens 230 (e.g., video screens), one or more cameras 240 (e.g., video cameras), a communications unit 250, and a detection system 260. The communications unit 250 and detection system 260 may be disposed in the frame 210. Each of the one or more bays 220 is disposed in the frame 210. Each of the plurality of screens 230 and cameras 240 is disposed in the plurality of bays 220. The screens 230, cameras 240, communications unit 250 and detection system 260 are in electronic communication with and controlled by one or more processors (not shown). The one or more processors may be located in the frame in each individual bay 220, or otherwise in communication with the retail system.

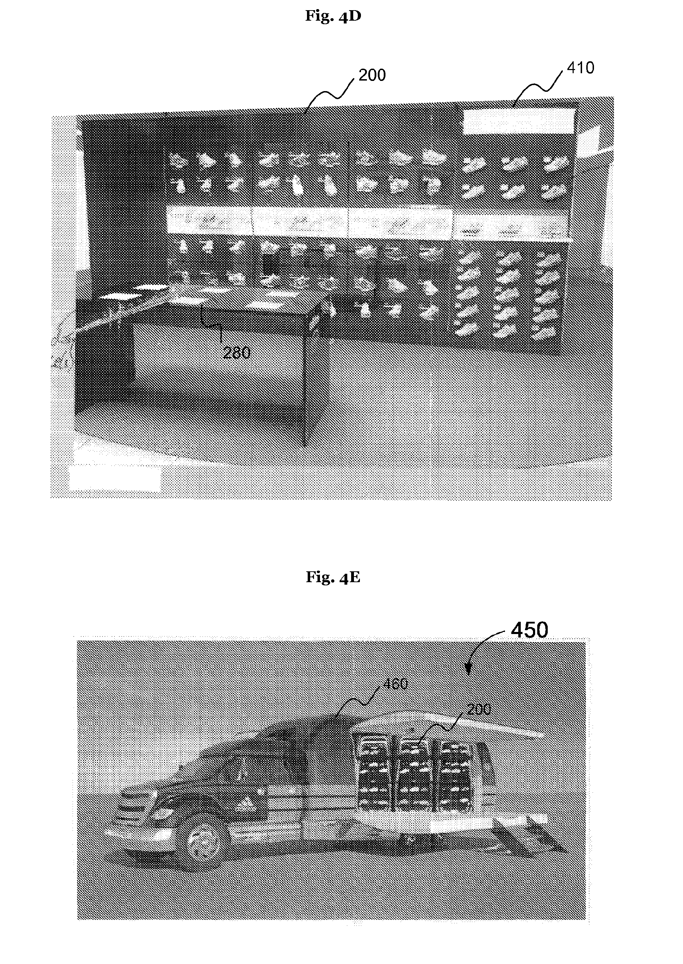

The frame 210 is a structural component that surrounds or encapsulates some of the other components of interactive retail system 200. In certain embodiments, the frame 210 is configured to house three bays 220 and the components therein. Alternatively, the frame 210 may be adaptable to encapsulate any number of bays in a modular fashion. For example, FIG. 2 depicts a frame 210 with three bays disposed therein, however other frame configurations may include more bays 220 or fewer bays 220 as required. According to certain embodiments, the frame 210 of interactive retail system 200 is mobile and/or transportable. For example, the frame 210 may include rollers, wheels, or other means known by those of ordinary skill in the art to transport the interactive retail system 200. In addition, each of the bays 220 may be removable in a modular fashion to further accommodate transporting the interactive retail system 200. The portable nature of the interactive retail system 200, due in part to the frame 200, provides for the use of the interactive retail system 200 in a variety of venues. In some non-limiting examples, the interactive retail system 200 may be operable as a kiosk or in a store, a vehicle (e.g., a semi-truck or other suitably sized commercial vehicle), or other commercial venue that would be known or appreciated by one of ordinary skill in the art. As described above, the frame 210 comprises the communications unit 250 and the detection system 260. Alternatively, the communications unit 250 and detection system 260 may be disposed in one or more of the bays 220. The operation of the communications unit 250 and detection system 260 are further described below. FIG. 4E is a depiction of a mobile retail system 450, according to certain exemplary embodiments. Mobile retail system 450 can include a vehicle 460 and an interactive retail system 200. As described above, the mobile retail system 290 can be setup at any location (e.g., football games, events, parades, etc.) and provide any and all functions as described above with FIG. 2 an the other various embodiments described herein.

Referring back to FIG. 2, each bay 220 is disposed in the frame 210 and includes one or more screens 230 and cameras 240. In some embodiments, the combination of the frame 210 and bays 220 are modular such that the frame 210, bay(s) 220, or both may be adapted to include any number of bays 220 as required.

Each camera (camera) 240 is disposed in a bay 220 and may be configured to perform a number of functions in conjunction with one or more processors including, but not limited to, motion detection, gender detection, user gesture detection, user physical attribute detection, and other types of camera based detection that would be known and appreciated by one of ordinary skill in the art. In motion detection, the camera 240 enables the interactive retail system 200 to detect when a user is nearby. This may be used, for example, to cause the interactive retail system 200 to initiate a specific type of advertisement on the screens 230 in response to detecting the presence of a user. For example, the one or more video screens 230 may display various banners or marketing information until a user is detected, at which point the display changes to an array of retail items available for purchase. In other embodiments, a camera 240 is configured to detect a person's gender. This may be useful for better targeted advertising. For example, the interactive retail system 200 may display men's shoes in response to detecting a male user. Gender detection may be based on various facial features and identifiers that would be known by one of ordinary skill in the art. The interactive retail system 200 may optionally detect a user's fingerprint (e.g., in touch sensitive screens 230) to identify a user. In yet further embodiments, the interactive retail system 200 can include speech recognition when a user, for example, gives voice commands to perform various retail functions (e.g., make a payment, customize a product, etc.). The system 200 may optionally utilize the user's data (e.g., facial feature data, fingerprint data, voice data) in combination with login data, payment devices (e.g., credit card number), and/or mobile devices to identify a user.

In further embodiments, the camera 240 is used to detect a user's physical gestures to enhance a user's interactive advertisement experience. For example, some embodiments can detect the position of a finger on a projection, shopping window, or the like, as an alternative to touch screen interfacing. In some embodiments, detecting a user swiping gesture may initiate a retail item scrolling function or move a selected retail item to a virtual trash bin or checkout bin on a screen 230. Similarly, a user kicking or jumping motion may prompt the interactive retail system 200 to display various athletic shoes on the screens 230. For example, a kicking motion or gesture may cause the interactive retail system 200 to display soccer shoes and/or related accessories. Some other non-limiting examples of associating user gestures with retail items on display in the user interactive environment include throwing gestures (e.g., football/baseball/basketball shoes, equipment, and accessories), swinging gestures (e.g., golf/hockey/lacrosse shoes and accessories), running gestures (e.g., running/hiking shoes and accessories), shooting gestures (e.g., sport hunting equipment), and the like. Other practical uses for gesture detection would be known by one of ordinary skill in the art with the benefit of this disclosure.

According to certain embodiments, the interactive retail system 200 uses camera(s) 240 to detect a user's physical attributes. In some embodiments, the camera(s) 240 may detect a user's shoe size (length and width) or physical dimensions including height, weight, or other measurements related to garment sizing using shape and pattern recognition techniques. Alternatively, the interactive retail system 200 may provide a virtual mirror where the cameras 240 capture the user's image and display it on the screens 230. Various retail items may be superimposed on the user's image to provide a virtual dressing room without having to physically try on each retail item. These various attributes may be useful in determining which clothing or shoe size (e.g., length and width measurement) would be appropriate for the user. In certain embodiments, the interactive retail system 200 can make size suggestions based on the captured image of the user. In some embodiments, other types of scanners can be used including laser or infra-red body scanners. These scanners can be used alone or in conjunction with the cameras 240 for image capture or to enhance the interactive experience (e.g., gesture detection, body image capture, etc.).

Any suitable type of camera 240 that can be integrated with interactive retail system 200 may be used. The camera 240 may be integrated within the bay 220 as shown, or within the frame 210. In certain embodiments, the camera 240 has a minimum capture resolution of 640 x 480. Increasing the capture resolution may improve detection sensitivity at the cost of increased bandwidth to retail system servers 110 if desired. Furthermore, connectivity between the cameras 240 and the system servers 110 may be established over internet protocol (IP), USB, or other communication standards known to those of ordinary skill in the art. The example interactive retail system 200 includes multiple cameras 240 per bay 220, however any number of cameras 240 arranged in a variety of configurations may be used to suit the desired application. For example, some cameras 240 may perform motion capture while others perform gesture detection. Multiple cameras 240 may also provide increased accuracy, range, or larger areas of detection. In some embodiments, the motion capture cameras 240 are manufactured by CognoVision Solutions, Inc. In other embodiments, cameras 240 supporting gesture based interaction are manufactured by PrimeSense Ltd. Interactive retail system 200 may utilize motion capture, gesture recognition, or both. In some embodiments, each bay 220 comprises four cameras 240 where three perform motion capture and one performs gesture detection, however any number and type of camera 240 may be used as described above. For example, one or more cameras 240 can include video cameras (color and/or monochrome), infra-red (IR) cameras, thermo cameras, low and/or high resolution cameras, or other types of cameras that would be applicable in a commercial retail setting, as would be appreciated by one of ordinary skill in the art with the benefit of this disclosure.

According to certain embodiments, the one or more screens (screens) 230 are disposed in each bay 220 and may be controlled by a processor (not shown). The video screens 230 may be configured to display a user interactive environment which includes a visual array of images for retail items available for purchase and audio/visual media, marketing, and statistics designed to promote and/or accompany the various retail items on display. In some embodiments, the user interactive environment may be designed to appear as a virtual projection (e.g., virtual shelf, virtual display, holographic image, etc.) such that various images of retail items are arranged on the screens 230 to appear as if they were present and physically displayed on a shelf. There are many ways that the screens 230 may depict the user interactive environment and are addressed below with respect to FIG. 5. In certain embodiments, the various images of retail items, audio/visual media, etc. are stored in the data storage device 115. It should be noted that each screen 230 may be programmed to display images in conjunction with other screens 230. For example, a particular bay 220 may include three screens 230 depicting a virtual projection (e.g., virtual shelf, virtual display) populated with an assortment of retail items and one screen directed to video advertisements of a particular retail item. Furthermore, combinations of video screen images may be combined across multiple bays 220. For example, each screen 230 in the interactive retail system 200 may be programmed to depict multiple virtual shelves (e.g., product displays, etc.). As described below, the detection system 260 detects when a user interacts (e.g., touches) the screen 230 to make a selection of a retail item. However, in some embodiments, the screens 230 are touch screens and may detect user interaction with the screens 230 independent of, or in conjunction with, the detection system 260.

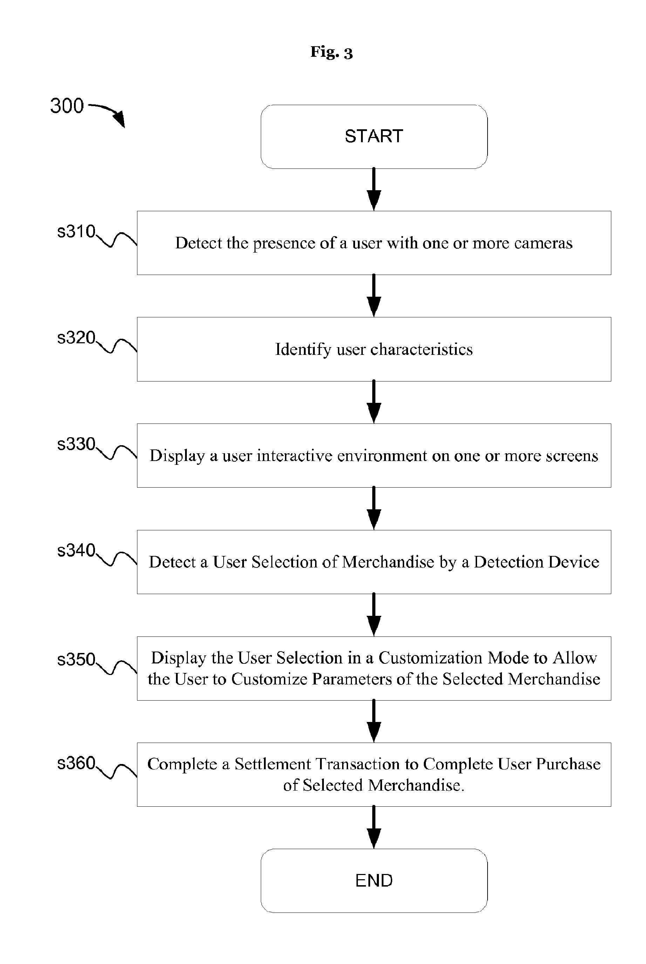

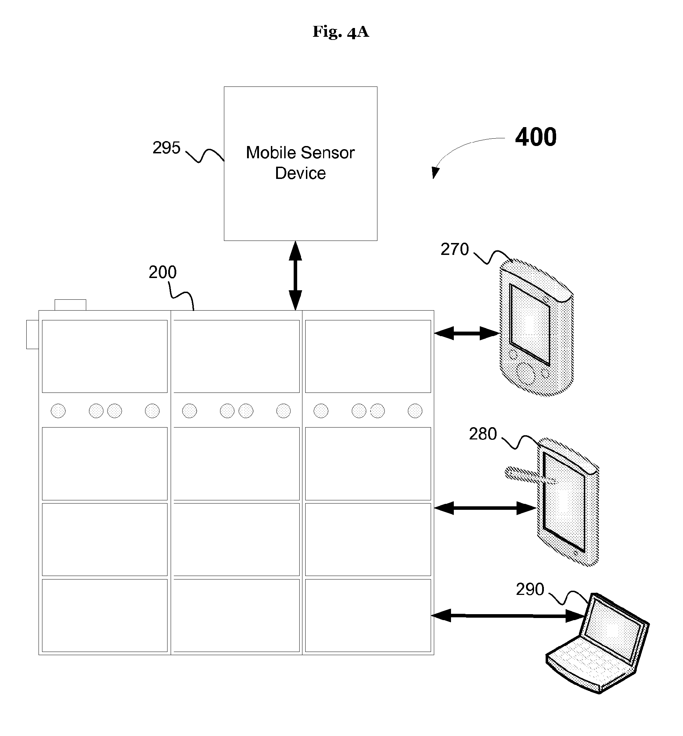

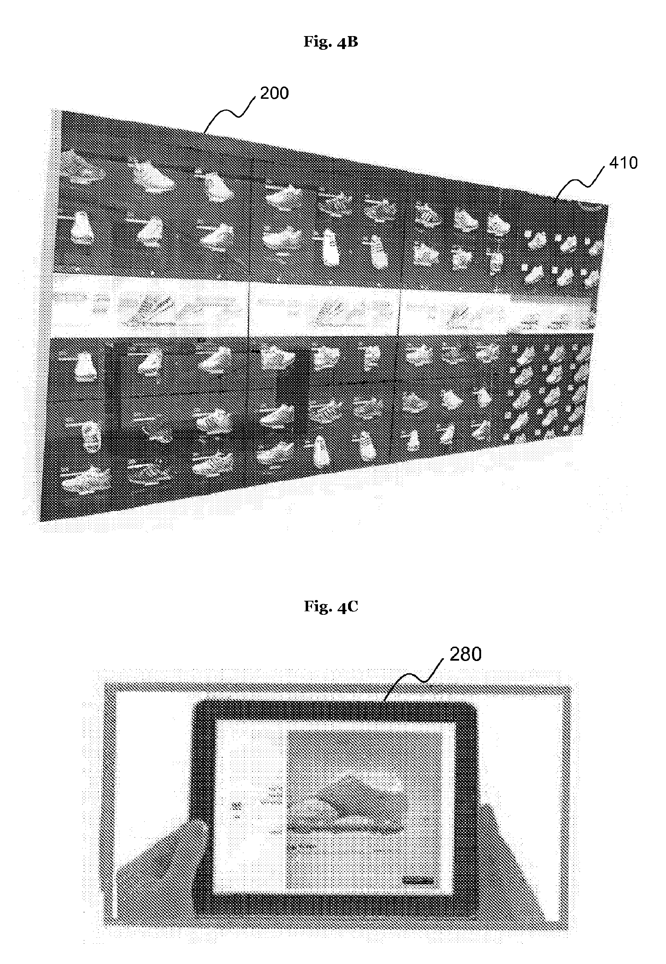

In certain embodiments, the communications unit (COM unit) 250 is controlled by a processor (not shown) and is configured to provide wireless communication between the interactive retail system 200 and external electronic devices (e.g. see FIG. 4A). For example, the COM unit 250 provides for communication between the interactive retail system 200 and personal electronic devices including cell phones, smart phones, tablet computers, notebook computers, personal digital assistants, and the like. As further described below with respect to FIGS. 3 and 4, a user may perform some of the interactive retail system 200 functions on a personal electronic device. For example, a user may select a particular retail item on the interactive retail system 200, and the COM unit 250 enables transfer of the selection to a tablet computer for further retail processing. The COM unit 250 is also configured to complete a settlement transaction (i.e., complete a purchase). This may include facilitating communications with a settlement server to settle a transaction between the user and a merchant associated with the interactive retail system 200. Settlement transactions involving credit cards, debit cards, prepaid cards, and the like are known by those of ordinary skill in the art. The COM unit 250 may be disposed in the frame 210, a bay 220, or a combination of both. The interactive retail system 200 may utilize multiple COM units 250 if communication with multiple users (e.g., multiple tablet computers) and/or multiple settlement transactions are to be performed simultaneously.

In certain embodiments, the detection system 260 is configured to detect when and where a user touches one of the screens 230 in the interactive retail system 200. In an embodiment, the detection system 260 utilizes infra-red (IR) technology to detect user interaction with the screens 230. The detection system 260 incorporates multiple IR components (not shown) to provide touch detection coverage over each of the screens 230. In addition to touch detection coverage, the detection system 260 is configured to recognize a variety of user gestures to manipulate images within the user interactive environment (e.g., images of retail items). For example, a touch gesture may select a retail item and a swipe gesture may move the image to another location. Other user gestures may rotate an item, select a group of items, or the like. It should be noted that the IR detection system 260 may provide a different type of gesture detection than the gesture detection cameras described above. For example, the IR detection system 260 may detect gestures on the one or more video screens 230 (e.g., touches, swipes, or other hand gestures, etc.) while the gesture detection cameras may be configured to detect gestures made a distance away from the interactive retail system 200 (e.g., a running or kicking motion, a hand swipe in the air, etc.) The interactive retail system 200 may utilize either or both the IR detection system 260 and the gesture detection cameras. In an alternative embodiment, the video screens 230 are touch screens configured to detect user touch commands. In some embodiments, the screens 230 can be video displays.

In an alternative embodiment, a user may open a user account and log in to the interactive retail system 200 by way of the user interactive environment (e.g., a "soft" keyboard on one of the screens 230) or a personal electronic device. A user account may provide the interactive retail system 200 with additional user information to better determine an appropriate selection of retail items to display in the interactive environment. For example, a user's purchase history may include size, model, color, and design for shoes and apparel, as well as purchase trends. In some embodiments, user accounts store user customization preferences for both the retail items and various settings in the interactive environment. For example, the user interactive environment may have a variety of display options, styles, or configurations. The interactive retail system 200 may be configured to automatically adapt to a user's preferred configuration for the interactive environment when the user logs in to the system. In a further embodiment, the interactive retail system 200 may track user behavior and adapt marketing and display configurations based on user responses to new and existing products. For example, if a user browses or selects a specific model or brand of sports shoe in the user interactive environment, the interactive retail system 200 can display additional advertisements, product media (e.g., commercials), or similar products related to the specific brand/model chosen by the user on the one or more screens 230. Alternatively, the interactive retail system 200 can display and suggest newer products and/or related accessories related to the user's product selection.

The interactive retail system 200 may optionally store information related to web browsing sessions, online shopping sessions, purchase transactions, product customizations, and the like, that are performed within the user interactive environment. In some embodiments, the web browsing sessions can include data transferred between the user and various sports and/or product related websites (e.g., www.miadidas.com, www.micoach.com, etc.). The stored information can be used to provide a shop assistant (e.g., salesperson) with additional information about the user for an improved customer service experience. For example, by knowing a customer's specific preferences, purchase histories, and/or performance statistics (e.g., running shoe data including best time, distance traveled, etc.), the shop assistant can better know how to address the customer's needs, questions, or interests, even before interacting with the customer. In certain embodiments, the additional data (e.g., web browsing data, purchase history, etc.) can be transferred to a mobile device (e.g., tablet 280, mobile phone 270,etc.) from the interactive retail system 200, to the interactive retail system 200 from a mobile device, or any combination thereof. In further embodiments, the user's tablet 280 can transfer the additional data to another tablet 280 (e.g., used by the shop assistant) and/or the interactive retail system 200.

FIG. 3 is a simplified flow diagram illustrating a method 300 for creating a user interactive environment on a interactive retail system 200, according to certain embodiments of the present invention. The method 300 is performed by processing logic that may comprise hardware (circuitry, dedicated logic, etc.), software (such as is run on a general purpose computing system or a dedicated machine), firmware (embedded software), or any combination thereof. In certain embodiments, the method 300 is performed by one or more processors in the interactive retail system 200 of FIG. 2. In another embodiment, the method 300 is performed in conjunction with the server computer 110 of FIG. 1A. In certain embodiments, the method 300 is performed by, or in conjunction with, processors located in a cloud server.

Referring to FIG. 3, the method 300 includes detecting the presence of a user by one or more cameras 240 (s310). As described above with respect to FIG. 2, the one or more cameras 240 may utilize motion detection or gesture detection to determine the presence of a user. In some embodiments, the interactive retail system 200 utilizes both motion detection and gesture detection to detect and interact with a user.

At step s320, the interactive retail system 200 identifies various user characteristics and/or identifying information. For example, the interactive retail system 200 can detect a person's gender based on the images captured by the cameras 240. Some embodiments can detect a user's physical dimensions including, but not limited to, a user's shoe size, height, and approximate body dimensions to determine appropriate sizes for shoes and apparel. Alternatively, the retail system may acquire user characteristics from a user account as previously described.

At step s330, the interactive retail system 200 displays a user interactive environment on one or more of the screens 230. The user interactive environment displays an assortment of media, marketing materials, statistics, web information, technical specifications, and more for retail items available for purchase. In certain embodiments, the interactive retail system 200 searches across a database (e.g., data storage 115) to identify the retail items, media, and marketing materials etc., that match the user characteristics (e.g. user gender). For example, if a user has logged in to the interactive retail system 200 (manually or automatically) and the interactive retail system 200 determines that the user has purchased a number of athletic shoes of a particular brand in the past, the interactive retail system 200 may display an assortment of similarly styled shoes on the one or more video screens 230. In other embodiments, the interactive retail system 200 displays retail items with sizes based on the user's physical dimensions captured at step s320. Alternatively, the interactive retail system 200 may display a default selection of retail items available for purchase. In further embodiments, the interactive retail system 200 may scan a retail item and display related information (e.g., marketing information, statistics, product specifications, etc.) on the one or more screens 230. The retail item can be scanned by photo or video, by bar code, quick response (QR) code, and the like. or any other way that would be appreciated by one of ordinary skill in the art. It should be understood that the interactive environment may be configured and displayed in a great variety of combinations and is no way limited to the examples described herein. The user interactive environment is discussed in more detail below with respect to FIG. 5.

At step s340, the interactive retail system 200 detects a user selection of retail items displayed on the one or more screens 230 by a detection device 260. According to certain embodiments, the detection device 260 is an IR detection system configured to detect a location where the user touches the one or more screens 230 to select, manipulate, and interact with one or more displayed images (e.g., retail items, related marketing media and statistics, etc.). It should be noted that although IR technology is described herein, other wireless technologies (e.g., blue tooth) or different bandwidths (e.g., visible light spectrum) may be used to detect user interaction with the one or more video screens. In alternative embodiments, the screens 230 are touch screens. Alternatively, the user may step on a platform to initiate interaction with the system 200. In such embodiments, the platform can have one or more pressure sensors, proximity sensors, and the like, included with and/or attached to the system 200.

At step s350, the interactive retail system 200 displays the user selected retail items in a customization mode to allow the user to customize various parameters of the selected retail items. For example, if the user selects a particular athletic shoe, various parameters such as the size, color (e.g., from an available color palette), and model may be selected. In a further embodiment, the user may reconfigure various features of the retail item including logos, product insignia, distinguishing symbols, etc., and place them in alternate locations. It should be noted that multiple retail items may be selected and customized on one or more screens 230. In one non-limiting example, one of the bays 220 and the screens 230 therein are dedicated to displaying a customization environment for a particular retail item selected by the user, while the remaining bays display marketing information, relevant media, or other products directed toward the user's buying preferences. Alternatively, the customization environment can be limited to any one screen 230 or a plurality of screens 230 that may or may not be disposed in one particular bay 220. Other customization options are available and are further discussed below with reference to FIG. 5.

At step s360, the interactive retail system 200 completes a settlement transaction to complete a user purchase of a selected retail item(s). For example, a user enters their credit card information to the interactive retail system 200 to effectuate a purchase of a selected item on a screen 230. Other payment devices may be used (e.g., debit cards, prepaid cards, etc.) and are known to those skilled in the art. In some embodiments, the interactive retail system 200 performs the settlement transaction between the user (i.e., with the user's payment device) and a settlement server, as described with respect to FIG. 1A. In alternative embodiments, the settlement transaction is performed in conjunction with a mobile electronic device. In certain embodiments, the interactive retail system 200 can communicate with external payment systems (e.g., in-store cash register) to complete a purchase transaction. For example, after a user selects an item to purchase, the interactive retail system 200 can send the purchase information (e.g., product selection, price, model, etc.) to a cash register for payment. In addition to payment information, the interactive retail system 200 can send supplementary information about the user (e.g., product preferences, purchase history, product browsing history, shoe size, etc.) to a shop assistant to help provide for more informed customer service. The supplementary information can be sent to the external payment system or the various mobile communications systems (e.g., tablet 280, mobile phone 270, etc.) described herein.

It should be appreciated that the specific steps illustrated in FIG. 3 provides a particular method of creating a user interactive environment on the retail system 100, according to embodiments of the present invention. Other sequences of steps may also be performed according to alternative embodiments. For example, alternative embodiments of the present invention may perform the steps outlined above in a different order. Moreover, the individual steps illustrated in FIG. 3 may include multiple sub-steps that may be performed in various sequences as appropriate to the individual step. Furthermore, additional steps may be added or removed depending on the particular applications. One of ordinary skill in the art would recognize and appreciate many variations, modifications, and alternatives of the method 300.

FIG. 4A is a simplified block diagram of retail system network 400, according to certain embodiments of the present invention. The retail system network 400 includes a interactive retail system 200, a mobile phone 270, a tablet computer (tablet) 280, a laptop computer 290, and a mobile sensor device 295. As described above, the mobile devices described herein may be configured to process some of the functionality of the retail device 200 including retail item browsing, selection, customization, and purchase transactions. The retail system network 400 may optionally include more or fewer mobile devices. For example, the retail system network 400 may only include the tablet 280. Alternatively, the retail system network 400 can include all of the mobile devices listed above in addition to a personal digital assistant (not shown), net book (not shown), additional tablets 280, additional mobile phones 270, additional laptops 290, and the like.

The interactive retail system 200 may communicate with one or more tablets 280. In one embodiment, each bay 220 can individually communicate with one or more tablets 280, wherein each of the bays function as an independent user interactive environment. Furthermore, each tablet 280 may be configured to interact with other tablets 280 in addition to the interactive retail system 200 via wireless or hardwired connection. Alternatively, a user may communicate with the interactive retail system 200. It should be noted that other methods of communication may be used including, but not limited to, Bluetooth and USB protocols.

In certain embodiments, the tablet 280 can download and display the same user interactive layout as the interactive retail system 200. For example, the user can download retail item designs or discount offers from the retail device 200 onto a tablet 280 for further processing, or vice versa. In some embodiments, a tablet 280 may perform checkout (e.g., finalizing a retail purchase, payment via payment device, etc.), offer additional information related to interactive retail system 200 including offers for promotions, host games, offer discounts for related products (e.g., discount socks for a given shoe), and host private sessions where most or all of the retail functions are performed on the tablet 280 and processed in the background cooperatively with the interactive retail system 200. In further embodiments, the tablet 280 can communicate with the interactive retail system 200 to display its content on one or more of the screens 230. It should be noted that notebooks, web books, or laptop computers 290 may perform similar functions. In certain cases, a tablet 280 can be provided to customers by a shop assistant. Alternatively, customers can use their own mobile devices that are configured to interact with interactive retail system 200.

In some embodiments, the interactive retail system 200 is configured to communicate with one or more mobile phones 270 and provide similar functionality as described above with respect to the tablet computer 280. In certain embodiments, the functionality of interactive retail system 200 can be downloaded into a mobile phone application to provide a private shopping experience to the customer.

In some embodiments, the interactive retail system 200 can identify products based on a quick response ("QR") code. QR codes are specific matrix barcodes than can be readable by smart phone 270 cameras and/or tablet 280 cameras, QR barcode readers, and the like.

In certain embodiments, the interactive retail system 200 is configured to communicate with a mobile sensor device 295. Some examples of a mobile sensor device 295 include, but are not limited to, shoe sensors, heart rate belts, and wristwatches. The interactive retail system 200 is configured to receive data related to exercise activity previously collected by the mobile sensor device 295. For example, a shoe sensor may send performance data (a user's running speed, distance, time, route, geography, best time, last activity, etc.) to prompt the interactive retail system 200 to display suggested retail items related to the particular activity (e.g., running shoes, performance drinks, etc.). In further embodiments, the interactive retail system 200 uploads the performance data to a workout webpage and retrieves a workout plan for the user based on aspects of the data. The workout plan may be displayed on the video screens 230, emailed to the user, or the like. Some mobile sensor devices 295 can be registered to a specific user (e.g., a shoe sensor) and configured to send user identifying data to the interactive retail system 200. User identifying data may be a customer number, a payment device number, or other identifying information that the interactive retail system 200 can use to associate with a specific user. The interactive retail system 200 can store the mobile sensor device 295 data (e.g., best time, distance, time, etc.) with additional data saved from the user's previous interaction with the interactive retail system 200 (e.g., user purchase histories, product customizations, product preferences, etc.). A shop assistant can utilize the saved information to better understand the user's needs and/or preferences to provide a better customer service experience. The shop assistant can then make informed product suggestions or give product advice based on the saved information without requiring the shop assistant to ask the user a lot of questions. It should be noted that other types of mobile electronic devices can be integrated into the interactive retail system 200 for an enhanced retail experience as would be appreciated by one of ordinary skill in the art with the benefit of this disclosure.

FIG. 4B is a depiction of a interactive retail system 200, according to certain exemplary embodiments. FIG. 4B includes an interactive retail system 200 and a real shelf 410 populated with various products for sale. The real shelf can be positioned adjacent to the interactive retail system for aesthetic continuity (e.g, display products in a similar configuration as can be shown on the interactive retail system 200). FIG. 4C is a depiction of a tablet computer 280 used in conjunction with an interactive retail system 200 (not pictured), according to certain exemplary embodiments. FIG. 4D is a depiction of an interactive retail system 200 and several mobile devices 280 used in conjunction with the interactive retail system 200, according to certain exemplary embodiments. FIG. 4D includes an interactive retail system 200 and a real shelf 410 populated with various products for sale. The real shelf can be positioned adjacent to the interactive retail system for aesthetic continuity (e.g, display products in a similar configuration as can be shown on the interactive retail system 200).

FIG. 5A is a simplified diagram illustrating some available features in the user interactive environment (UIE) 500 of the interactive retail system 200, according to an embodiment of the invention. Some features include access to social media 520, web content 530, gaming services 540, additional shopping opportunities 550, mobile capability 560, and customization and design 570. As described above with respect to FIGS 2-3, the user interactive environment 500 is presented by a combination of the one or more video screens 230 (e.g., the visual depiction of retail items, media, etc.), cameras 240 (e.g., detecting the presence of a user, detecting user gestures, etc.), and the detection system 260 (detect user interaction with the one or more screens 230).

In certain embodiments, a user may access social media 520 from the user interactive environment of interactive retail system 200. For example, a user can connect to social media pages, post messages from the user interactive environment 500 to their own user profile, share customized products, post or share special offers and/or discounts, and post any product of the interactive retail system 200 on their own social profiles. In some embodiments, a user may access web content 530 including all websites and usage of all services through the user interactive environment 500. In certain embodiments, a user can access all websites associated with the related products, the brand of the products or services of the interactive retail wall, and use all services from the UIE 500. For example, a user can connect to their own profile on a website for managing workout data and workout plans, or for customization of products with the possibility to store and share the user's own creations and designs from the UIE 500. Some applicable fitness managing websites that can be managed from the UIE 500 include micoach (www.adidas.com/us/micoach) and miadidas (www.miadidas.com), however it should be noted that these websites are exemplary and other websites can be used. The interactive retail system 200 can be configured to allow a customer to access any public website from the UIE 500.

Some embodiments may host gaming services 540 within the user interactive environment 500. For example, some games may offer special prices or discounts, offer unlockable features of a customizable product or retail item, or provide in-store entertainment for waiting customers including adults and children alike. In certain embodiments, games associated with the interactive retail system 200 may be downloaded and hosted on one or more tablets 280, mobile phones 270, and the like.

The user interactive environment 500 may offer additional shopping opportunities 550. For example, the UIE 500 may save viewed products from the user and send the information to a shop assistant (e.g., store employee) for further advice or recommendations. The UIE 500 can save many types of data including workout data uploaded from a workout website (e.g., www.micoach.com), sales data and/or browsing history from online shopping sites, and the like. The UIE 500 may offer coupons or special offers when the interactive retail system 200 recognizes a return customer (e.g., by user registration). The UIE 500 can evaluate a user's product likes and dislikes and display product selections based those criteria. In some embodiments, the UIE 500 may offer auctions or display marketing content for special events with associated special offers. In another embodiment, the UIE 500 provides support for 24 hour shopping. For example, the interactive retail system 200 may be located behind a shopping window where a user may access the UIE 500 and order retail item(s) for shipping to their residence or for later pickup. In certain embodiments, the UIE 500 can offer variable pricing on certain products based on the number of product purchases or on the total amount of the transaction. For example, large purchases may yield greater discounts than smaller purchases. In further embodiments, the UIE 500 can display targeted advertisements when a user is recognized by the interactive retail system 200. For example, the UIE 500 can switch from a general advertising mode (e.g., cycling through various advertisements when the UIE 500 is not interacting with a user) to a series of advertisements based on the user's purchase history, product preferences, previous product customizations, and the like. Alternatively, the UIE 500 can make special offers (e.g., coupons and/or discounts) to the user to incentivize purchases.

In certain embodiments, the UIE 500 can welcome new customers (e.g., user's that have not previously accessed or registered with the interactive retail system 200) by prompting or asking specific questions regarding their fitness behavior and/or sports interests and suggest products based on the user's answers. For example, if a user plays basketball, the interactive retail system 200 can display an assortment of popular basketball shoes and/or accessories. In other embodiments, the UIE 500 asks or prompts customers to interact with the various interactive features described herein (e.g., product customization, product media, websites, etc.). In certain embodiments, the UIE 500 is configured to prompt the questions to the user on one or more of the screens 230. The interactive retail system 200 can optionally prompt questions to the user by way of an audio system (not shown) in conjunction with a voice recognition system (not shown) to process user responses.

In some embodiments, the UIE 500 provides customer support services to the user. The customer support can be passive (e.g., help screens with answers to frequently asked questions) or real-time (e.g., automated or human interaction). For example, the customer can connect to customer service personnel via the UIE 500 and conduct a personalized customer service experience. Services can include technical support for using the interactive retail system 200, answering customer questions, and the like. In certain embodiments, the service personnel can be a real person videoconferencing with the customer on the wall (e.g., screen 230, projection, or separate display device) to answer specific questions or provide general guidance. The service person can be additionally connected to the secondary device. In such embodiments, the service personnel can guide the user though the various menus and/or features of the interactive retail system 200. In alternative embodiments, the customer service personnel can be a virtual person interacting with the customer. For example, the virtual person can follow a program which responds to a catalog of common questions. In another example, the customer selects a question on the screen 230 (e.g., display) of the interactive retail system 200 or secondary device (e.g., tablet computer 280) to receive answers or guidance through various menus.

The customer services described herein can further provide information on products, news and other related topics, as well as music and game interactions. In some embodiments, a customer service person can provide specialized advice with regard to medical questions. For example, the customer service person can provide advice on how to adjust fitness training to accommodate certain health problems particular to a customer, and which products are best suited to help alleviate or reduce symptoms that are associated with the particular health problem (e.g., shoes adapted to the particular type off fitness training). The service person can be a specialist on a certain sport or product, for example for football shoes, or golf clubs. The service person can be a stylist or a technical specialist. In one embodiment the customer service interface can be also used for events within a shopping environment. For example, one or more customers can have coached fitness training in front of the screen 230 (wall, projection) or receive advice on how to use specific products (e.g., golf club). Alternatively, the service person can be a celebrity (e.g., pro-football player) to answer questions from fans during certain events within the shopping environment.

The interactive retail system 200 has mobile capabilities 560. In certain embodiments, the mobile capabilities 560 include physically transporting the interactive retail system 200 from one location to the next, and sending retail data via mobile communication devices and/or networks. Regarding physical transportation, for example, the interactive retail system 200 (i.e., the user interactive environment 500) may be displayed within a store, in a suitably sized vehicle, or at unconventional locations (airports, sporting events, in a tent, in desolate areas, on a screen for public viewing, in the background on a stage, etc.). Alternatively, the interactive retail system 200 can provide a decorative function. For example, the interactive retail system 200 can depict decorative images and/or non-product related interactive displays during a scheduled sporting event and can return to the retail mode during breaks or before/after the scheduled event, according to an embodiment of the invention. It should be noted that the mobile capabilities may be extended to the external mobile devices and settlement transactions, as described above with reference to FIGS. 1 and 2.

As described above with respect to FIGS. 2 and 3, a user may perform detailed customization and design 570 operations to create unique and detailed retail items on the UIE 500. For example, a user can create a shoe with colors, logos, logo placement, and the like in any desirable configuration within the specifications of the interactive retail system 200. In one embodiment, the user may enlarge the selected retail item to provide for detailed customizations and feature placement. In certain embodiments, the screens 230 can be configured to display retail products in their actual size, which may be rotated or resized by the user to view the retail items from all angles. The user may further upload the new products to a mobile device (e.g., tablet or mobile phone) or website. It should be noted that the UIE 500 can store data generated from user interaction with the various interactive features (e.g., customization, gaming, accessing web content and social media, etc.) described herein. In certain embodiments, the data generated from user interaction ("user interaction data") with the various interactive features can be stored in the data storage device 115. The interaction data can be used for business tracking (e.g., tracking customer purchase trends, sales numbers, etc.), feature evaluation (e.g., determine which interactive features are popular with customers), and the like. In some embodiments, the interaction data can be sent to a store assistant to give them information about the customers to help provide an improved customer service experience as described above.

FIG. 5B is a simplified flow diagram illustrating a method 580 for creating a shopping session with a customer, according to certain embodiments of the present invention. The method 580 is performed by processing logic that may comprise hardware (circuitry, dedicated logic, etc.), software (such as is run on a general purpose computing system or a dedicated machine), firmware (embedded software), or any combination thereof. In certain embodiments, the method 580 is performed by one or more processors in the interactive retail system 200 of FIG. 2. In another embodiment, the method 580 is performed in conjunction with the server computer 110 of FIG. 1A. In certain embodiments, the method 580 is performed by, or in conjunction with, processors located in a cloud server.

Referring to FIG. 5B, the method 580 includes displaying images of products available for purchase to attract customers (step s582). In certain embodiments, the interactive retail system 200 displays the images of products on one or more of the screens 230. As described above with respect to FIGS. 2-5A, the images of products can be images of merchandise related to shoes, apparel, accessories, and the like.

At step s584, the interactive retail system 200 initiates a shopping session with a customer. For example, the customer may select an image of a particular product (e.g., running shoes), thus prompting the interactive retail system 200 to begin a user interactive environment as described above with reference to FIG. 5A. In such cases, the customer may customize a product, access web content or media about the selected product, play interactive games, and the like.

At step s586, the interactive retail system 200 transfers the shopping session to a secondary device. For example, if a customer (i.e., a user) wishes to customize a particular product or review web material in private (i.e., not on the one or more screens 230), then the shopping session can be transferred to a tablet computer 280. The secondary device can continue the shopping session (step s588). In certain embodiments, the shopping session on the secondary device can be substantially identical to the shopping session on the interactive retail system 200 (e.g., similar UIE interface, same interactive features, etc.). Once the shopping session is transferred to the secondary device, the interactive retail system 200 ends the shopping session on itself (step 590). In certain embodiments, this may be desirable because it makes the interactive retail system 200 available for additional customers. In this manner, i.e. by continuing the shopping session on the secondary device, the interactive retail system 200 may be used by a second user while the first user still finishes his/her shopping session, thereby optimizing the resource usage in case of multiple concurrent users.

At step s592, the secondary device completes a purchase transaction of one or more of the products available for purchase. For example, the secondary device (e.g., tablet 280) can provide purchasing options where the customer selects one or more products for purchase, enters payment information (e.g., credit card information), and completes the purchase transaction. Alternatively, the payment information can be sent to a shop assistant (i.e., wirelessly transmit transaction data to a shop assistant's tablet 280) to complete the purchase transaction. In another embodiment, the transaction can be redirected to the interactive retail system 200.

It should be appreciated that the specific steps illustrated in FIG. 5B provides a particular method creating a shopping session with a customer, according to embodiments of the present invention. Other sequences of steps may also be performed according to alternative embodiments. For example, alternative embodiments of the present invention may perform the steps outlined above in a different order. Moreover, the individual steps illustrated in FIG. 5B may include multiple sub-steps that may be performed in various sequences as appropriate to the individual step. Furthermore, additional steps may be added or removed depending on the particular applications. One of ordinary skill in the art would recognize and appreciate many variations, modifications, and alternatives of the method 580.

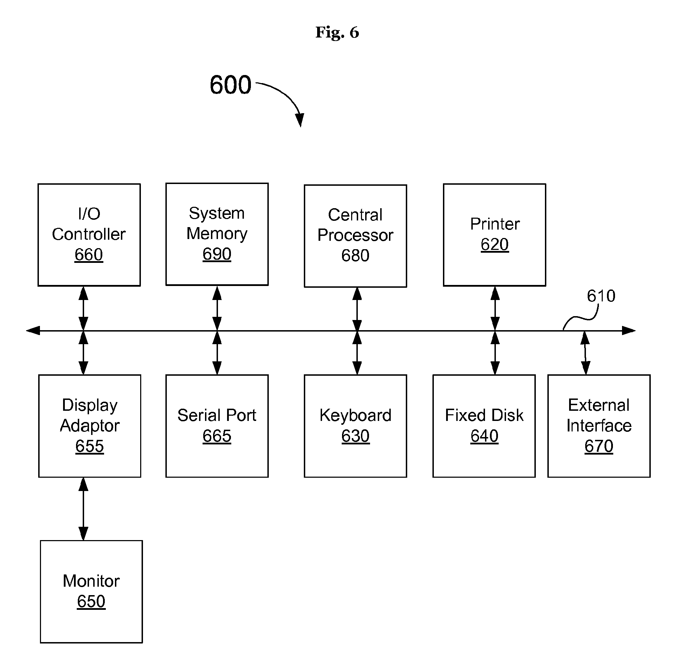

FIG. 6 is a diagram of a computer apparatus 600, according to an example embodiment. The various participants and elements in the previously described system diagrams (e.g., the interactive retail system 200 in FIGS. 1-5) may use any suitable number of subsystems in the computer apparatus to facilitate the functions described herein. Examples of such subsystems or components are shown in FIG. 6. The subsystems shown in FIG. 6 are interconnected via a system bus 610. Additional subsystems such as a printer 620, keyboard 630, fixed disk 640 (or other memory comprising computer-readable media), monitor 650, which is coupled to display adapter 655, and others are shown. Peripherals and input/output (I/O) devices (not shown), which couple to I/O controller 660, can be connected to the computer system by any number of means known in the art, such as serial port 665. For example, serial port 665 or external interface 670 can be used to connect the computer apparatus to a wide area network such as the Internet, a mouse input device, or a scanner. The interconnection via system bus allows the central processor 680 to communicate with each subsystem and to control the execution of instructions from system memory 690 or the fixed disk 640, as well as the exchange of information between subsystems. The system memory 690 and/or the fixed disk 640 may embody a computer-readable medium.

The software components or functions described in this application may be implemented as software code to be executed by one or more processors using any suitable computer language such as, for example, Java, C++ or Perl using, for example, conventional or object-oriented techniques. The software code may be stored as a series of instructions, or commands on a computer-readable medium, such as a random access memory (RAM), a read-only memory (ROM), a magnetic medium such as a hard-drive or a floppy disk, or an optical medium such as a CD-ROM. Any such computer-readable medium may also reside on or within a single computational apparatus, and may be present on or within different computational apparatuses within a system or network.

The present invention can be implemented in the form of control logic in software or hardware or a combination of both. The control logic may be stored in an information storage medium as a plurality of instructions adapted to direct an information processing device to perform a set of steps disclosed in embodiments of the present invention. Based on the disclosure and teachings provided herein, a person of ordinary skill in the art will appreciate other ways and/or methods to implement the present invention.

In embodiments, any of the entities described herein may be embodied by a computer that performs any or all of the functions and steps disclosed.

Any recitation of "a", "an" or "the" is intended to mean "one or more" unless specifically indicated to the contrary.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.
Further preferred embodiments of the present invention are disclosed as follows:
1. A method comprising:
   displaying, on a virtual projection, at least one image of at least one product available for purchase to attract customers, the virtual projection comprising one or more displays to display the at least one image of the at least one product;
   initiating a shopping session with a customer on the virtual projection whereby the customer has access to one or more products related to the virtual projection;
   transferring the shopping session to a secondary device; and
   continuing the shopping session on the secondary device.
2. The method of embodiment 1 further comprising accessing the at least one image of at least one product on the secondary device.
3. The method of embodiment 1 further comprising receiving a customer selection of one or more of the images of products.
4. The method of embodiment 1 further comprising initiating a customization mode to allow a customer to customize properties of one or more of the images of products.
5. The method of embodiment 1 wherein the secondary device is one of a mobile phone, a tablet computer, a notebook computer, a personal digital assistant, a remote device or a desktop computer.
6. The method of embodiment 1 further comprising ending the shopping session on the virtual projection.
7. The method of embodiment 2 wherein the shopping session further includes completing a purchase transaction with the customer wherein the customer purchases at least one product related to the selected one or more images of products on the one or more displays.
8. A method comprising:
   displaying, on a virtual projection, one or more images of products available for purchase to attract customers, the virtual projection comprising one or more displays to display the images of products;
   initiating a shopping session with a customer on the virtual projection;
   receiving a customer selection of one or more of the images of products;
   transferring the customer selection to a secondary device; and
   continuing the shopping session on the secondary device.
9. The method of embodiment 8 wherein the shopping session includes receiving, from the customer, customization data related to the images of products available for purchase, wherein the customization data includes customized attributes of the images of products.
10. The method of embodiment 9 wherein the customized attributes include one or more of a size, color, model, or location of product insignia on the one or more images of products.
11. The method of embodiment 8 further including providing a plurality of interactive features on the one or more displays.
12. The method of embodiment 11 wherein the plurality of interactive features include one or more of interactive web sites, product customization, product marketing media, gaming services, or access to product technical specifications.
13. The method of embodiment 12 further comprising receiving interactive data from the customer, wherein the interactive data includes data generated from customer interaction with one or more of the plurality of interactive features.
14. The method of embodiment 13 further comprising sending the interactive data to a sales person.
15. The method of embodiment 14 wherein sending the interactive data to the sales person further includes sending the interactive data to a secondary device operated by the sales person.
16. The method of embodiment 8 further comprising completing a purchase transaction.
17. A method comprising:
   displaying on a virtual projection, one or more images of products available for purchase to attract customers, the virtual projection comprising one or more displays to display the images of products;
   detecting at least one of a customer's physical features or data from a customer's mobile sensor device;
   determining customer information based on at least one of the customer's physical features or the data from the customer's mobile sensor device; and
   sending the customer information to a secondary device.
18. The method of embodiment 17 wherein detecting the customer's physical features includes determining at least one of a customer's gender, shoe size, or body dimensions.
19. The method of embodiment 17 wherein detecting data from the customer's mobile sensor device includes detecting data from at least one of shoe sensor, a heart rate belt, sensor shirt or a wristwatch.
20. The method of embodiment 17 wherein the customer information further includes the customer's purchase history, product customizations, product preferences, and web browsing history.
21. A method, comprising:
   displaying, on a virtual projection, at least one image of at least one product available for purchase, the virtual projection comprising one or more displays to display the at least one image of the at least one product;
   initiating a shopping session with a customer on the virtual projection whereby the customer has access to one or more products related to the virtual projection; and
   transferring the shopping session to a secondary device for continuing the shopping session on the secondary device.
22. The method of embodiment 21, wherein the shopping session comprises receiving a customer selection of one or more of the images of products.
23. The method of embodiment 21 or 22, wherein the shopping session comprises receiving, from the customer, customization data related to the at least one image of the at least one product,
   wherein the customization data comprises customized attributes of the at least one image of the at least one product, the customized attributes comprising a size, color, model and / or location of product insignia on the at least one image of the at least one product.
24. The method of any of the preceding embodiments 21 - 23, wherein the secondary device is one of a mobile phone, a tablet computer, a notebook computer, a personal digital assistant, a remote device or a desktop computer.
25. The method of any of the preceding embodiments 21 - 24, further comprising providing a plurality of interactive features on the virtual projection, wherein the plurality of interactive features comprise one or more interactive web sites, product customization, product marketing media, gaming services and / or access to product technical specifications.
26. The method of any of the preceding embodiments 21 - 25, further comprising detecting, by at least one sensor, at least one of a customer's physical features, comprising the customer's gender, shoe size and / or body dimensions.
27. The method of any of the preceding embodiments 21 - 26, further comprising detecting data from a customer's mobile sensor device, comprising data from a shoe sensor, a heart rate belt, a sensor shirt, other product sensor, a mobile device and / or a wristwatch.
28. The method of any of the preceding embodiments 26 or 27, wherein the detecting of at least one of the customer's physical features and / or data from the customer's mobile sensor device is performed when the customer approaches the virtual projection; and
   wherein the displayed at least one image of at least one product depends on the detected physical features and / or data from the mobile sensor device.
29. The method of any of the preceding embodiments 21 - 28, further comprising tracking, by at least one sensor, a physical movement of the customer,
   wherein the displayed at least one image of at least one product depends on the tracked physical movement.
30. The method of the preceding embodiment 29, wherein the physical movement comprises body language and / or facial expressions of the customer.
31. The method of any of the preceding embodiments 21 - 30, wherein the secondary device is a device available within a retail environment usable for completing a purchase transaction with the customer.
32. The method of any of the preceding embodiments 21 - 30, wherein the secondary device is a device of the customer usable for storing the shopping session.
33. An interactive retail system, adapted for performing a method of any of the preceding embodiments 21 - 32.
34. A computer program comprising instructions for performing a method of any of the preceding embodiments 21 - 32.

## Claims

1. A method, comprising:
displaying, on a virtual projection, at least one image of at least one product available for purchase, the virtual projection comprising one or more displays to display the at least one image of the at least one product;
initiating a shopping session with a customer on the virtual projection whereby the customer has access to one or more products related to the virtual projection; and
transferring the shopping session to a secondary device for continuing the shopping session on the secondary device.

2. The method of claim 1, wherein the shopping session comprises receiving a customer selection of one or more of the images of products.

3. The method of claim 1 or 2, wherein the shopping session comprises receiving, from the customer, customization data related to the at least one image of the at least one product,
wherein the customization data comprises customized attributes of the at least one image of the at least one product, the customized attributes comprising a size, color, model and / or location of product insignia on the at least one image of the at least one product.

4. The method of any of the preceding claims, wherein the secondary device is one of a mobile phone, a tablet computer, a notebook computer, a personal digital assistant, a remote device or a desktop computer.

5. The method of any of the preceding claims, further comprising providing a plurality of interactive features on the virtual projection, wherein the plurality of interactive features comprise one or more interactive web sites, product customization, product marketing media, gaming services and / or access to product technical specifications.

6. The method of any of the preceding claims, further comprising detecting, by at least one sensor, at least one of a customer's physical features, comprising the customer's gender, shoe size and / or body dimensions.

7. The method of any of the preceding claims, further comprising detecting data from a customer's mobile sensor device, comprising data from a shoe sensor, a heart rate belt, a sensor shirt, other product sensor, a mobile device and / or a wristwatch.

8. The method of any of the preceding claims 6 or 7, wherein the detecting of at least one of the customer's physical features and /or data from the customer's mobile sensor device is performed when the customer approaches the virtual projection; and
wherein the displayed at least one image of at least one product depends on the detected physical features and / or data from the mobile sensor device.

9. The method of any of the preceding claims, further comprising tracking, by at least one sensor, a physical movement of the customer,
wherein the displayed at least one image of at least one product depends on the tracked physical movement.

10. The method of the preceding claim 9, wherein the physical movement comprises body language and / or facial expressions of the customer.

11. The method of any of the preceding claims, wherein the secondary device is a device available within a retail environment usable for completing a purchase transaction with the customer.

12. The method of any of the preceding claims 1 - 10, wherein the secondary device is a device of the customer usable for storing the shopping session.

13. An interactive retail system, adapted for performing a method of any of the preceding claims 1 - 12.

14. A computer program comprising instructions for performing a method of any of the preceding claims 1 - 12.
